# EUROPÄISCHE PATENTANMELDUNG

(11) **EP 4 535 532 A1**
(43) Veröffentlichungstag der Anmeldung: **09.04.2025**
(21) Anmeldenummer: 23201259.1
(22) Anmeldetag: 02.10.2023
(51) Int. Cl.: H01M 50/242

(54) **BATTERIETRÄGERBAUTEIL, INSBESONDERE BATTERIETRÄGER, UND VERFAHREN ZUR HERSTELLUNG EINES BATTERIETRÄGERBAUTEILS**

(71) Anmelder: Nemak, S.A.B. de C.V., 66017 García, Nuevo León (MX)
(72) Erfinder: Fleck, Thomas, 51107 Köln (DE); Lebertz, Benedikt, 65510 Idstein (DE)
(74) Vertreter: Cohausz & Florack

(57) **Zusammenfassung**

Die Erfindung betrifft ein Batterieträgerbauteil (2), insbesondere einen Batterieträger mit einem Bauteilelement (4) mit einem Aufnahmebereich (6) zur Aufnahme zumindest einer als Antriebsenergiespeicher für ein elektrisches Fahrzeug dienenden Batterie, mit zumindest einem Bauteilelement (4) mit mindestens einem Aufnahmebereich (6) zur Anlage an und/oder Aufnahme der zumindest einen Batterie (14, 22), und mit einer Schaumstoffstruktur (12), wobei die Schaumstoffstruktur (12) zumindest teilweise in dem Aufnahmebereich (6) angeordnet ist. Die Erfindung betrifft auch ein Verfahren zur Herstellung eines Batterieträgerbauteils (2).

## Beschreibung

Die vorliegende Erfindung betrifft ein Batterieträgerbauteil, insbesondere einen Batterieträger, zur Aufnahme zumindest einer als Antriebsenergiespeicher für ein elektrisches Fahrzeug dienenden Batterie. Die vorliegende Erfindung betrifft ebenfalls ein Verfahren zur Herstellung eines Batterieträgerbauteils, insbesondere eines vorgenannten Batterieträgerbauteils.

Elektrisch angetriebene Fahrzeuge der hier in Rede stehenden Art führen in der Regel eine Mehrzahl an Batteriemodulen umfassend Batteriezellen mit sich, die als Antriebsenergiespeicher dienen und die für den Fahrbetrieb benötigte elektrische Energie zur Verfügung stellen. Insbesondere handelt es sich bei einem elektrisch angetriebenen Fahrzeug der hier in Rede stehenden Art um ein Elektroauto, welches im Wesentlichen ausschließlich von einem Elektromotor angetrieben wird. Alternativ kann der vorgenannte Batterieträger auch bei einem Hybrid-Fahrzeug eingesetzt werden, welches zusätzlich zu einem Elektromotor noch einen Verbrennungsmotor aufweist.

Da Batteriemodule regelmäßig ein hohes Gewicht aufweisen, stellt ihre Platzierung im Fahrzeug nicht nur aus statischer Sicht hohe Anforderungen an die Tragstruktur des Fahrzeugs, sondern beeinflusst zusätzlich auch die im Fahrbetrieb auftretenden dynamischen Kräfte.

Im Hinblick auf das Fahrverhalten hat sich eine Platzierung der einzelnen Batteriemodule oder einzelner Batterien, auch genannt Batteriezellen, im Bodenbereich des Fahrzeugs als vorteilhaft herausgestellt. Um dies zu ermöglichen, sind Batterieträger vorgeschlagen worden, die im Wesentlichen flach und plattenartig ausgebildet sind. Derartige Batterieträger lassen sich im Bodenbereich des Fahrzeugs anordnen und mit dem Chassis des Fahrzeugs verbinden.

An die statische und dynamische Belastbarkeit voranstehend erläuterter Batterieträger werden demnach erhebliche Anforderungen gestellt. So soll der Batterieträger nicht nur in der Lage sein, die einzelnen Batteriemodule zu tragen, sondern auch die dynamischen Lasten aufnehmen, die im Fahrbetrieb des Fahrzeugs entstehen. Ebenfalls soll der Batterieträger die aufgenommenen und leicht entzündlichen Batteriemodule, insbesondere im Falle eines Unfalls, bestmöglich schützen.

Darüber hinaus ist es vorteilhaft, wenn ein Batterieträger ein möglichst geringes Gewicht aufweist, so dass das Gesamtgewicht des Fahrzeugs durch den Batterieträger nicht übermäßig erhöht wird und Energie bei der Bewegung des Fahrzeugs eingespart werden kann. Weiterhin ist es vorteilhaft, Batterieträger möglichst kostengünstig herzustellen. Dies gestaltet sich als weitere Herausforderung, da trotz einer Gewichts- und Kostenreduktion die vorgenannten Anforderungen an die statische und dynamische Belastbarkeit von Batterieträgern erfüllt werden sollen.

Demnach stellen Batterieträger ein für die Sicherheit, Funktionsfähigkeit und Kosteneffektivität von Fahrzeugen entscheidendes Bauteil dar. Derartige Anforderungen an die Herstellung von Batterieträgern und deren Bauteilen führen mitunter zur Vorsehung von komplexen Geometrien der Batterieträger. Bedingt durch die komplexen Geometrien der Batterieträger werden häufig Fertigungsverfahren angewendet, bei denen mehrere Bauteile miteinander verbunden, insbesondere miteinander verschweißt, werden müssen. Die hierbei entstehenden Verbindungsstellen können allerdings zu Undichtigkeiten führen, so dass die von dem Batterieträger aufgenommenen Batteriemodule nicht zuverlässig vor dem Eindringen von Flüssigkeit, insbesondere von Wasser, geschützt sind.

In diesem Zusammenhang hat es sich als vorteilhaft erwiesen, eine Rahmenstruktur des Batterieträgers aus zumindest einem tiefgezogenen Bauteil, insbesondere aus zumindest einem tiefgezogenen Blech, zu fertigen. Durch das Tiefziehen kann ein Batterieträger mit nur wenigen Verbindungsstellen zur Verfügung gestellt werden, so dass die Dichtheit des Batterieträgers verbessert werden kann.

Vorgenanntes Vorgehen ist allerdings dahingehend nachteilig, dass durch den Tiefziehprozess im Wesentlichen senkrechte Wandelemente nicht hergestellt werden können, so dass Randbereiche des Batterieträgers aufgrund des nur begrenzten Bauraums nicht mit Batteriemodulen oder einzelnen Batterien bestückt werden können. Darüber hinaus ergeben sich auf diese Weise im Randbereich des Batterieträgers, insbesondere nicht sinnvoll genutzte, Zwischenräume. Aufgrund des begrenzten Bauraums sind zudem die Grenzen hinsichtlich konstruktiver Optimierungen des entsprechenden Randbereichs schnell erreicht.

Weiterhin ist im Stand der Technik bekannt, eine Rahmenstruktur als Bestandteil eines Batterieträgers vorzusehen, die die Batteriemodule oder einzelne Batterien umschließt, wobei die Rahmenstruktur in einem Randbereich des Batterieträgers angeordnet wird. Die in der Regel mehrteilige Rahmenstruktur wird beispielsweise mit weiteren Bauteilen des Batterieträgers verklebt und kann aus Kunststoff und/oder Metall hergestellt sein. Die Rahmenstruktur dient darüber hinaus als Energieabsorber und kann die, insbesondere bei abruptem Be- oder Entschleunigen des Fahrzeugs auftretenden, auf die Batteriemodule oder einzelnen Batterien einwirkenden Kräfte abdämpfen. Nachteilig bei einer mehrteiligen Rahmenstruktur ist dabei, dass die verschiedenen Teile der Rahmenstruktur sich beispielsweise bei Temperatureinwirkung unterschiedlich ausdehnen können. Auf diese Weise können Hohlräume zwischen den einzelnen Teilen sowie erhöhte Krafteinwirkungen auf einzelne Teile der Rahmenstruktur auftreten. Darüber hinaus erfordert eine mehrteilige Rahmenstruktur ein teils aufwendiges Herstellungsverfahren.

Vor diesem Hintergrund liegt der vorliegenden Erfindung die Aufgabe zugrunde, ein Batterieträgerbauteil, insbesondere einen Batterieträger, zur Verfügung zu stellen, mittels welchem der Randbereich des Batterieträgerbauteils vorteilhaft genutzt werden kann und welcher vorteilhafte Eigenschaften in Bezug auf statische und dynamische Belastungen sowie Gewicht und Kosteneffektivität aufweist. Des Weiteren soll ein Verfahren zur Herstellung eines Batterieträgerbauteils zur Verfügung gestellt werden, welches eine kostengünstige Fertigung eines leichten Batterieträgerbauteils mit vorteilhaften statischen und dynamischen Eigenschaften ermöglicht.

Diese Aufgabe wird gemäß einer ersten erfindungsgemäßen Lehre gelöst durch ein Batterieträgerbauteil, insbesondere einen Batterieträger, zur Aufnahme zumindest einer als Antriebsenergiespeicher für ein elektrisches Fahrzeug dienenden Batterie, mit zumindest einem Bauteilelement mit mindestens einem Aufnahmebereich zur Anlage an und/oder Aufnahme der zumindest einen Batterie, und mit zumindest einer Schaumstoffstruktur, wobei die Schaumstoffstruktur zumindest teilweise in dem Aufnahmebereich angeordnet ist.

In vorteilhafter Weise kann die Schaumstoffstruktur Stoßbelastungen, insbesondere bei Erschütterungen und/oder abruptem Be- oder Entschleunigen des Fahrzeugs, abdämpfen, indem sie als Energieabsorber und Schutz der zumindest einen Batterie fungiert. Des Weiteren kann die Schaumstoffstruktur Energie im Falle eines Crashs mit einem anderen Fahrzeug oder Objekt (teil-)absorbieren und zudem in vorteilhafter Weise auf mehrere Batterien verteilen, wodurch die mechanische Belastung der einzelnen Batterien reduziert werden kann. Gleichzeitig weist die Schaumstoffstruktur ein relativ geringes Gewicht im Vergleich zu entsprechenden Strukturen aus Metall und/oder Kunststoff auf. Auf diese Weise kann ein Batterieträgerbauteil zur Verfügung gestellt werden, das ein geringes Gericht aufweist und zuverlässig dynamische und statische Belastungen des Fahrzeugs, insbesondere das Batterieträgers, ausgleicht und insbesondere die Batterien vor diesen schützt. Die Schaumstoffstruktur kann darüber hinaus flexibel geometrisch gestaltet sein, so dass Zwischenräume, die beispielsweise durch nicht senkrechte Wände des Batterieträgers entstehen, sinnvoll gefüllt bzw. genutzt werden können. Auch eine Temperaturausdehnung weiterer Materialien des Batterieträgers kann durch das Vorsehen der Schaumstoffstruktur kompensiert werden.

Das Batterieträgerbauteil ist insbesondere als Batterieträger insbesondere umfassend zumindest einen Batterieträgerrahmen ausgebildet. Insbesondere ist die Schaumstoffstruktur fest und/oder im Wesentlichen unlösbar mit dem Bauteilelement verbunden, beispielsweise formschlüssig und/oder stoffschlüssig.

Vorzugsweise ist zwischen Schaumstoffstruktur und Bauteilelement ein Verbindungsmittel, beispielsweise Klebstoff, Vergussmasse oder ähnliches, vorgesehen. Hierdurch kann die Schaumstoffstruktur in vorteilhafter Weise mit dem zumindest einen Bauteilelement verbunden werden. Beispielsweise ist es ebenfalls bevorzugt, dass die Schaumstoffstruktur selbst an dem zumindest einen Bauteilelement haftet, beispielsweise mittels einer während einer Expansion der Schaumstoffstruktur erzeugten chemischen Reaktion. Insbesondere ist die Schaumstoffstruktur formschlüssig mit dem zumindest einen Bauteilelement verbunden. Beispielsweise weist das zumindest eine Bauteilelement hierzu zumindest ein Formelement, insbesondere in Form zumindest eines Vorsprungs auf, wobei der Schaum sich während eines Expansionsvorgangs formschlüssig mit dem zumindest einen Formelement verbindet.

Der Aufnahmebereich grenzt bevorzugt an die zumindest eine Batterie an und/oder umschließt diese zumindest teilweise. Bevorzugt ist der Aufnahmebereich zur Aufnahme einer oder mehrerer Batterien oder Batteriemodule eingerichtet, insbesondere entsprechend geformt.

Das Bauteilelement kann beispielsweise als einzelnes Element eines Batterieträgerrahmens, beispielsweise als eine Seitenwand eines Rahmens, oder als mehrere, insbesondere zusammenhängende, Teilelemente eines Batterieträgerbauteils, insbesondere Batterieträgerrahmens, ausgestaltet sein.

Anstelle einer oder mehrerer Batterien können auch ein oder mehrere Batteriemodule mit mehreren Batterien, auch genannt Batteriezellen, von dem Aufnahmebereich aufgenommen werden und/oder an diesem anliegen. Insbesondere dient die zumindest eine Batterie als Antriebsenergiespeicher für ein elektrisch angetriebenes Fahrzeug.

Die Schaumstoffstruktur kann die Batterie oder die Batterien oder ein oder mehrere Batteriemodule teilweise oder im Wesentlichen vollständig umschließen, so dass die zumindest eine Batterie zuverlässig vor Krafteinwirkung geschützt werden kann.

Bevorzugt ist die Schaumstoffstruktur zumindest teilweise zwischen der zumindest einen Batterie und dem Bauteilelement angeordnet, so dass sie in vorteilhafter Weise als Energieabsorber dienen und die zumindest eine Batterie vor Krafteintragung aus Richtung des Bauteilelements, beispielsweise durch Erschütterungen des Bauteilelements, schützen kann. Weiterhin kann vorgesehen sein, dass die Schaumstoffstruktur die zumindest eine Batterie im Wesentlichen vollständig umgibt, um so einen besonders hohen Schutz zu gewährleisten.

Es ist weiterhin bevorzugt, dass die Schaumstoffstruktur den Aufnahmebereich zumindest in einer im Einbauzustand horizontalen Ebene im Wesentlichen vollständig umgibt, insbesondere, dass der gesamte Aufnahmebereich von der Schaumstoffstruktur umschlossen ist, so dass die Schaumstoffstruktur neben der Aufnahme der mechanischen Belastungen ferner die Abdichtung der Batterien gegenüber der Umgebung des Batterieträgerbauteils verbessert.

Weiterhin können in dem Batterieträgerbauteil, beispielsweise in dem Bauteilelement und/oder der Schaumstoffstruktur, Aussparungen, beispielsweise für (Kühl-)Kanäle und/oder für elektrische Verbindungen, vorgesehen sein. Des Weiteren ist es bevorzugt, dass Aufnahmen für elektronische Komponenten und/oder Befestigungsaufnahmen, wie beispielsweise Gewindebuchse, in dem Batterieträgerbauteil, insbesondere in der Schaumstoffstruktur vorgesehen sind.

Die Schaumstoffstruktur kann beispielsweise im Wesentlichen expandiertes Polypropylen (EPP), Polyurethan (PU) und/oder expandiertes Polyethylen (EPE, vernetzt oder unvernetzt) umfassend, insbesondere aus expandiertem Polypropylen (EPP), Polyurethan (PU) und/oder expandiertem Polyethylen (EPE, vernetzt oder unvernetzt) bestehen. Beispielsweise kann es sich bei der Schaumstoffstruktur auch um Metallschaum, insbesondere um Aluminiumschaum handeln. Hierdurch kann beispielsweise eine Schaumstoffstruktur mit hoher thermischer Leitfähigkeit und vorteilhaften mechanischen Eigenschaften bei gleichzeitig niedrigem Gewicht ermöglicht werden.

Das Batterieträgerbauteil ist insbesondere mit dem Chassis eines Fahrzeugs verbindbar und dient insbesondere der Aufnahme mehrerer Batterien, wobei die mehreren Batterien oder Batteriezellen in einem oder mehreren Batteriemodulen angeordnet sein können.

Gemäß einer zweiten erfindungsgemäßen Lehre wird die oben genannte Aufgabe auch gelöst durch ein Verfahren zur Herstellung eines Batterieträgerbauteils, insbesondere eines Batterieträgers, insbesondere des zuvor beschriebenen Batterieträgerbauteils, bei dem ein Bauteilelement mit einem Aufnahmebereich zur Aufnahme von und/oder Anlage an zumindest einer Batterie bereitgestellt wird, bei das Bauteilelement und/oder die Schaumstoffstruktur optional einer Oberflächenbehandlung unterzogen wird, und bei dem eine Schaumstoffstruktur zumindest teilweise in dem Aufnahmebereich angeordnet wird. Bevorzugt wird zu diesem Zweck zunächst ein Schaumstoff ein- oder angespritzt, insbesondere in oder an das Bauteilelement und insbesondere in den Aufnahmebereich, und zu einer Schaumstoffstruktur ausgehärtet, insbesondere innerhalb oder außerhalb das Batterieträgerbauteils, in letzterem Fall beispielsweise unter Zuhilfenahme eines weiteren Elements zur Formgebung der Schaumstoffstruktur.

Auf diese Weise kann ein simples und kostengünstiges Verfahren zur Herstellung eines Batterieträgerbauteils zur Verfügung gestellt werden. Insbesondere kann die Schaumstoffstruktur flexibel ausgestaltet und in dem Aufnahmebereich angebracht werden, so dass die Geometrie des Batterieträgerbauteils insbesondere vorteilhaft an die Anzahl und Form der Batterie oder Batteriemodule angepasst werden kann. Darüber hinaus kann vorzugsweise auf ein mögliches Verkleben oder ein anderweitiges Fügen bzw. Assemblieren mehrerer Teile, insbesondere mehrerer Teile umfassend Hilfselemente, wobei die mehreren Teile zu einer Rahmenstruktur zusammengesetzt werden, verzichtet werden.

Beispielsweise handelt es sich bei der Oberflächenbehandlung um ein sogenanntes Korona-Verfahren, wodurch die Anhaftung der zumindest einen Schaumstoffstruktur bzw. des Schaumstoffs an dem zumindest einen Bauteilelement verbessert werden kann. Insbesondere handelt es sich bei dem Korona-Verfahren um eine elektrochemische Oberflächenbehandlung, mittels welcher insbesondere die Oberflächenspannung erhöht werden kann. Beispielsweise kann die Anhaftung der zumindest einen Schaumstoffstruktur bzw. des Schaumstoffs an dem zumindest einen Bauteilelement auch mittels auf das zumindest eine Bauteilelement und/oder die zumindest eine Schaumstoffstruktur aufgebrachten Klebstoff verbessert werden.

Insbesondere wird zur Herstellung der Schaumstoffstruktur ein Schaumstoff aus expandiertem Polypropylen (EPP), Polyurethan (PU) und/oder expandiertem Polyethylen (EPE, vernetzt oder unvernetzt) verwendet. Insbesondere wird die Schaumstoffstruktur hergestellt, indem ein Schaumstoff in das Batterieträgerbauteil eingebracht, insbesondere eingespritzt, wird.

Im Folgenden werden weitere verschiedene bevorzugte Ausführungsformen des Batterieträgerbauteils, insbesondere des Batterieträgers, und des Verfahrens zur Herstellung eines Batterieträgerbauteils beschrieben, wobei die verschiedenen Ausführungsformen miteinander kombinierbar sind und entsprechend für Ausführungsformen des Batterieträgerbauteils sowie für das Verfahren gelten.

Gemäß einer Ausführungsform des Batterieträgerbauteils ist das zumindest eine Bauteilelement als Wanne, insbesondere als Batteriewanne mit einem Boden und mit in einem Winkel dazu angeordneten Wänden ausgebildet, wobei die Oberseite des Bodens und die Innenseiten der Wände den Aufnahmebereich zumindest teilweise begrenzen.

Auf diese Weise wird eine Aufnahme für zumindest eine Batterie gebildet, die die Batterie insbesondere zumindest auf drei Seiten umgibt und diese somit zuverlässig schützen kann. Insbesondere kann außerdem ein Deckel vorgesehen sein, mit dem die Oberseite der Wanne verschlossen werden kann, so dass die Batterien im Wesentlichen von allen Seiten geschützt sind.

Beispielsweise erstreckt sich das Batterieträgerbauteil über eine Länge in einem Bereich von 1500 und 2500 mm und über eine Länge in einem Bereich von 800 bis 1600 mm. Durch vorgenannte Abmessungen kann die für den Fahrbetrieb benötigt Energie von den Batterien in ausreichender Weise zur Verfügung gestellt werden.

Beispielsweise weist das Batterieträgerbauteil ein Gewicht in einem Bereich von 3 bis 6 kg, insbesondere in einem Bereich von 4 bis 5 kg auf. Weiterhin ist es bevorzugt, dass die Schaumstoffstruktur ein Gewicht in einem Bereich von 1 bis 3 kg, insbesondere in einem Bereich von 1,25 bis 2,25 kg aufweist. Durch die Verwendung der Schaumstoffstruktur kann somit ein besonders leichtes Batterieträgerbauteil, insbesondere ein besonders leichter Batterieträger, zur Verfügung gestellt werden, der dennoch die geforderten mechanischen Belastungen aufnehmen kann.

Des Weiteren ist es bevorzugt, dass ein im Wesentlichen baugleiches Batterieträgerbauteil spiegelverkehrt als Deckel mit dem Batterieträgerbauteil verbunden, insbesondere verschweißt, verschraubt, insbesondere verschraubt und anschließend abgedichtet, und/oder verklebt, ist und hierdurch ein nach außen abgeschlossener Batterieträger zur Verfügung gestellt werden kann. Insbesondere umfassen beide Batterieträgerbauteile in einem solchen Fall ein tiefgezogenes als Wanne ausgestaltetes einstückiges Bauteilelement.

Gemäß einer weiteren Ausführungsform des Batterieträgerbauteils ist die Schaumstoffstruktur zumindest teilweise an den Innenseiten der Wände der Wanne angeordnet. Auf diese Weise kann die Schaumstoffstruktur besonders vorteilhaft als Energieabsorber zwischen Wanne und der zumindest einen Batterie dienen. Bevorzugt ist die Schaumstoffstruktur im Wesentlichen innerhalb der Wanne angeordnet, insbesondere am Innenrand der Wanne. Insbesondere ist die Schaumstoffstruktur an allen Innenseiten der Wände angeordnet. Es ist auch möglich, dass die Schaumstoffstruktur, insbesondere zusätzlich, auf der Oberseite des Bodens, also der Seite des Bodens der Wanne, der der zumindest einen Batterie zugewandt ist, angeordnet ist. Bevorzugt bildet die Schaumstoffstruktur einen, insbesondere seitlich angeordneten, inneren Rahmen für die zumindest eine Batterie innerhalb des Batterieträgerbauteils, insbesondere innerhalb des Batterieträgerrahmens.

Gemäß einer weiteren Ausführungsform des Batterieträgerbauteils ist an zumindest einer Außenseite der Wände zumindest ein Kraftverteilerelement angeordnet, wobei das Kraftverteilerelement dazu eingerichtet ist, auf die zumindest eine Außenseite der Wände einwirkenden Kräfte auf die jeweilige Wand zu verteilen.

Auf diese Weise kann verhindert werden, dass Kräfte nur punktuell auf die Wände des Bauteilelements und somit auf die, insbesondere dahinterliegende, Schaumstoffstruktur ausgeübt werden und zu Beschädigungen des Bauteilelements, der Schaumstoffstruktur und/oder der Batterien führen. Vielmehr dient das zumindest eine Kraftverteilerelement dazu, dass punktuell aufzunehmende Kräfte über zumindest einen Teil des Kraftverteilerelements verteilt werden und somit auch flächig in das zumindest eine Bauteilelement sowie die Schaumstoffstruktur eingeleitet werden können. Bevorzugt liegt das Kraftverteilerelement im Wesentlichen formschlüssig an der den Außenseiten der Wände des Bauteilelements an. Bevorzugt ist das Kraftverteilerelement dazu eingerichtet, die Steifigkeit des Batterieträgerbauteils zu erhöhen. Bevorzugt ist auch das zumindest eine Bauteilelement ebenfalls dazu eingerichtet, die Steifigkeit des Batterieträgerbauteils zumindest teilweise zu erhöhen und so punktuell auftretende Kräfte zu verteilen.

Beispielsweise umfasst, insbesondere besteht, das zumindest eine Kraftverteilerelement, aus einer Aluminiumlegierung, insbesondere der Aluminiumlegierung EN AW 6060. Hierdurch kann ein Werkstoff für das zumindest eine Kraftverteilerelement zur Verfügung gestellt werden, welcher trotz geringen Gewichts eine ausreichende Verteilung der auftretenden Kräfte ermöglichen kann. Alternativ kann das zumindest eine Kraftverteilerelement eine Stahllegierung umfassen, insbesondere aus dieser bestehen, und/oder einen faserverstärkten Kunststoff umfassen, insbesondere aus diesem bestehen.

Es ist bevorzugt, dass zumindest zwei sich gegenüberliegende Kraftverteilerelemente an den Außenseiten von gegenüberliegenden Wänden des zumindest einen Bauteilelements vorgesehen sind. Hierdurch kann die Einleitung von Kräften in das zumindest eine Batterieträgerbauteil weiter verbessert werden. In diesem Zusammenhang ist es besonders bevorzugt, dass an jeder Außenseite der Wände des als Wanne ausgebildeten Bauteilelements jeweils zumindest ein Kraftverteilerelement angeordnet ist.

Eine weitere bevorzugte Ausgestaltung ist dadurch gekennzeichnet, dass das zumindest eine Kraftverteilerelement als im Wesentlichen längliches Profil, insbesondere als extrudiertes Profil, ausgebildet ist. Beispielsweise erstreckt sich das zumindest eine Kraftverteilerelement über im Wesentlichen die gesamte Außenseite zumindest einer Wand. Eine derartige Ausgestaltung hat sich insbesondere hinsichtlich einer guten Kraftverteilung als vorteilhaft erwiesen. Beispielsweise kann die Profilstruktur des im Wesentlichen länglichen Profils mehrere hohle Kammern aufweisen, so dass das Gesamtgewicht des Kraftverteilerelements reduziert werden kann.

Gemäß einer weiteren Ausführungsform des Batterieträgerbauteils ist das Bauteilelement als ein durch Umformen, insbesondere durch Tiefziehen, hergestelltes, insbesondere dünnwandiges, Blechbauteil ausgebildet. Es hat sich herausgestellt, dass auf diese Weise ein besonders beständiges und gleichzeitig kostengünstiges Batterieträgerbauteil zur Verfügung gestellt werden kann, welches ebenfalls vorteilhaft hinsichtlich der Dichtigkeit ist. Insbesondere ist das Bauteilelement als tiefgezogenes Blechbauteil, insbesondere Leichtmetallblechbauteil wie beispielsweise Aluminiumblechbauteil, ausgebildet. Es kann auch vorsehen sein, dass das Blechbauteil im Wesentlichen aus einem Verbundwerkstoff besteht, beispielsweise aus einem Verbund von Metall und Kunststoff, insbesondere mit einer Faserverbundstruktur. Auf diese Weise kann Gewicht eingespart und gleichzeitig die Steifigkeit des Batterieträgerbauteils erhöht werden. Es ist ferner bevorzugt, dass das Bauteilelement einstückig oder zweistückig ist.

Gemäß einer weiteren Ausführungsform des Batterieträgerbauteils ist die Schaumstoffstruktur derart angeordnet und eingerichtet, dass sie zumindest eine Aufnahme für zumindest eine Batterie, insbesondere für zumindest eine Batteriezelle, bildet. Auf diese Weise kann die zumindest eine Batterie sicher fixiert und geschützt werden, ohne dass das Anbringen weiterer Elemente im Batterieträgerbauteil notwendig ist. Besonders vorteilhaft hat sich die Vorsehung einer solchen Aufnahme bei der sogenannten "Cell-to-Pack" Technologie herausgestellt, bei welcher die einzelnen Batteriezellen unmittelbar in dem Batterieträger angeordnet sind, ohne dass diese zu einzelnen Batteriemodulen zusammengefasst sind. Beispielsweise können mittels der zumindest einen Aufnahme Batteriezellen, beispielsweise Pouch-Batteriezellen, Rundzellen und/oder prismatische Batteriezellen sicher fixiert werden, so dass keine weiteren Bauteile zur Lagerung der Batteriezellen verwendet werden müssen. Zudem kann durch die in der Schaumstoffstruktur vorgesehene mindestens eine Aufnahme ein verbesserter Schutz für die zumindest eine Batteriezelle vorgesehen werden. Insbesondere kann die Schaumstoffstruktur mehrere Aufnahmen bilden. Besonders bevorzugt ist dabei vorgesehen, dass jeweils eine Batterie oder ein Batteriemodul in zwei sich gegenüberliegenden Aufnahmen aufgenommen und sicher gehalten werden kann.

Gemäß einer weiteren Ausführungsform des Batterieträgerbauteils korrespondiert die zumindest eine Aufnahme zu der Außenkontur der zumindest einen Batterie, wobei die zumindest eine Aufnahme insbesondere im Wesentlichen kurvenförmig, besonders bevorzugt halbzylindrisch, ausgebildet ist. Hierdurch können die Batteriezellen zuverlässig in dem Batterieträgerbauteil fixiert werden. Dabei wird unter einer im Wesentlichen halbzylindrischen Form eine Form verstanden, die geringe Abweichungen zu einer idealen halbzylindrischen Form aufweist, beispielsweise konstruktions- und fertigungsbedingte Abweichungen. Eine solche Form ist besonders vorteilhaft für die Aufnahme einzelner Batterien. Darüber hinaus sind auch weitere Formen der zumindest einen Aufnahme denkbar und in Abhängigkeit von weiteren möglichen Batterieformen vorteilhaft, beispielsweise eine rechteckige oder dreieckige Form, insbesondere mit abgerundeten Ecken.

Gemäß einer Ausführungsform des Verfahrens wird die Schaumstoffstruktur in dem Aufnahmebereich angeordnet, indem ein Schaumstoff in das Bauteilelement eingebracht, insbesondere eingespritzt und zu der Schaumstoffstruktur verschäumt, insbesondere expandiert oder ausgehärtet, wird. Dies ermöglicht eine besonders einfache und flexible Form der Herstellung. Beispielsweise kann der Schaumstoff in vorgefertigte ein oder mehrere Ausnehmungen, beispielsweise ein oder mehrere Ausnehmungen für ein oder mehrere Batterien oder Batteriemodule, in das Bauteilelement, insbesondere in den Batterieträger, eingebracht, insbesondere eingespritzt, werden. Auch ist es möglich, dass die Ausnehmungen bzw. Aufnahmen für die Batterien erst durch das Einbringen und Verschäumen des Schaumstoffs zu der Schaumstoffstruktur geformt werden.

Gemäß einer weiteren Ausführungsform des Verfahrens wird die Schaumstoffstruktur in dem Aufnahmebereich angeordnet, indem ein Formwerkzeug derart in dem Aufnahmebereich lösbar angeordnet wird, dass zumindest ein Zwischenraum zwischen einer Innenseite des Bauteilelements und dem Formwerkzeug gebildet wird, in den der Schaumstoff eingebracht, insbesondere eingespritzt, und zu der Schaumstoffstruktur verschäumt, insbesondere ausgehärtet, wird.

Auf diese Weise kann kostengünstig mittels eines Formwerkzeugs eine Vielzahl an Batterieträgerbauteilen mit im Wesentlichen geometriegleichen Schaumstoffstrukturen hergestellt werden. Insbesondere wird das Formwerkzeug derart angeordnet, dass mehrere, bevorzugt von mehreren Seiten geschlossene, Zwischenräume gebildet werden. Insbesondere wird das Formwerkzeug nach dem Aushärten des Schaumstoffs zu der Schaumstoffstruktur wieder entfernt. Insbesondere bleibt der ausgehärtete Schaumstoff in dem zumindest einen Zwischenraum als Schaumstoffstruktur bestehen. Beispielsweise kann als Formwerkzeug eine von außen um das Batterieträgerbauteil anzuordnende Form verwendet werden oder eine äußere Form, in die das Bauteilelement eingelegt wird. Insbesondere kann das Formwerkzeug geschlossen und wieder geöffnet werden. Beispielsweise wird das Formwerkzeug zunächst um das Bauteilelement herum geschlossen und es wird zumindest ein Zwischenraum zwischen einer Innenseite des Bauteilelements und dem Formwerkzeug gebildet, in den der Schaumstoff eingespritzt wird und nach dem Aushärten wird das Formwerkzeug insbesondere wieder geöffnet und das Bauteilelement mit Schaumstoffstruktur entnommen.

Gemäß einer weiteren Ausführungsform des Verfahrens wird die Schaumstoffstruktur in dem Aufnahmebereich angeordnet, indem zumindest ein Begrenzungselement derart in dem Aufnahmebereich angeordnet, insbesondere an eine Innenseite des Bauteilelements geklebt, wird, dass zumindest ein Zwischenraum zwischen einer Innenseite des Bauteilelements und dem Begrenzungselement gebildet wird, in den der Schaumstoff eingebracht, insbesondere eingespritzt, und zu der Schaumstoffstruktur verschäumt, insbesondere ausgehärtet, wird. Insbesondere verbleibt das Begrenzungselement nach dem Aushärten des Schaumstoffs in dem Aufnahmebereich, insbesondere an der Innenseite des Bauteilelements, besonders bevorzugt an einer Innenseite eines Bodens des Bauteilelements, insbesondere der Wanne. Bevorzugt ist der mittels des Begrenzungselements gebildete zumindest eine Zwischenraum von zumindest einer Seite offen, so dass der Schaumstoff vorteilhaft von dieser Seite aus eingebracht, insbesondere eingespritzt, werden kann.

Gemäß einer weiteren Ausführungsform des Verfahrens wird die Schaumstoffstruktur in dem Aufnahmebereich angeordnet, indem der Schaumstoff zumindest teilweise in zumindest ein Formelement eingebracht, insbesondere eingespritzt, und zu der Schaumstoffstruktur verschäumt, insbesondere ausgehärtet wird, wobei das Formelement das Verschäumen des Schaumstoffs zumindest teilweise begrenzt, und die Schaumstoffstruktur, insbesondere zusammen mit dem Formelement, in dem Aufnahmebereich angeordnet wird. Insbesondere kann die Schaumstoffstruktur mit dem Formelement in dem Aufnahmebereich, insbesondere an einer Innenseite des Bauteilelements, angeklebt werden. Bevorzugt wird die Schaumstoffstruktur dadurch geformt, dass der Schaumstoff expandiert, bis der expandierte Kunststoff die Innenkontur des zumindest einen Formelements erreicht. Bei dem in das Formelement eingebrachten Schaumstoff kann es sich beispielsweise um bereits vorexpandierten Schaumstoff, insbesondere um vorexpandierte Schaumstoffkügelchen, handeln. Bevorzugt erfolgt die Formgebung zumindest teilweise mittels der Innenkontur des zumindest einen Formelements. Beispielsweise wird der Schaumstoff mittels Wasserdampf und/oder mittels Radiowellenstrahlung verschäumt, insbesondere expandiert, wodurch der Schaumstoff vorzugsweise miteinander verschweißt.

Auf diese Weise kann bereits außerhalb des Batterieträgerbauteils und vor Anbringen der Schaumstoffstruktur die gewünschte Form der Schaumstoffstruktur flexibel gewählt werden. Als das zumindest eine Formelement kann beispielsweise ein den Schaumstoff umgebendes Element, beispielsweise eine Metall-, insbesondere Aluminium-, schiene verwendet werden.

Gemäß einer weiteren bevorzugten Ausgestaltung kann die Schaumstoffstruktur durch eine Krafteinwirkung mittels des zumindest einen Formelement oder mittels eines formgebenden Elements geformt werden. Die bevorzugte Krafteinwirkung wird insbesondere mittels eines formgebenden Elements bewirkt, beispielsweise wird ein formgebendes Element in den expandierenden Schaumstoff gedrückt, so dass dieser entsprechend der, insbesondere entsprechend der Negativ-, Form des formgebenden Elements zu der Schaumstoffstruktur geformt, insbesondere verschäumt, wird. Insbesondere bildet das formgebende Element, insbesondere zumindest die zumindest eine Seite des Elements, die in den Schaumstoff gedrückt wird, das Negativ der gewünschten Form der Schaumstoffstruktur. Beispielsweise ist die zumindest eine Seite des formgebenden Elements, die in den Schaumstoff gedrückt wird, konvex, so dass sich eine konkave Form der Schaumstoffstruktur ergibt. Beispielsweise wird der Schaumstoff während des Aushärtens mittels des zumindest einen formgebenden Elements mittels einer Kraft beaufschlagt, so dass die gewünschte Schaumstoffstruktur geformt wird.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Im Folgenden wird die Erfindung anhand von Ausführungsbeispielen mit Bezug auf die Zeichnung erläutert. In der Zeichnung zeigen
- Fig. 1a-c: ein erstes Ausführungsbeispiel eines Batterieträgerbauteils,
- Fig. 2a-b: ein weiteres Ausführungsbeispiels eines Batterieträgerbauteils,
- Fig. 3a-c: ein erstes Ausführungsbeispiel eines Verfahrens zur Herstellung eines Batterieträgerbauteils,
- Fig. 4a-b: ein zweites Ausführungsbeispiel eines Verfahrens zur Herstellung eines Batterieträgerbauteils, und
- Fig. 5a-b: ein drittes Ausführungsbeispiel eines Verfahrens zur Herstellung eines Batterieträgerbauteils.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

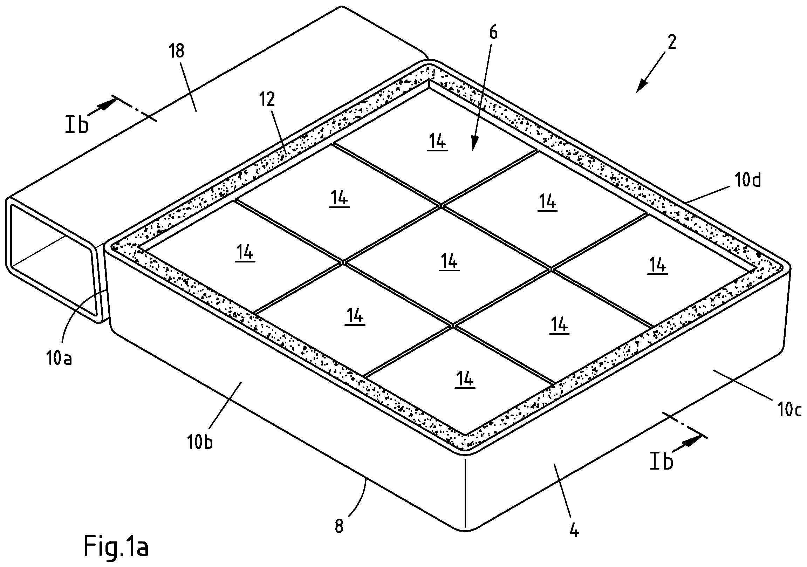

Fig. 1a zeigt schematisch ein erstes Ausführungsbeispiel eines Batterieträgerbauteils 2, hier in Form eines Batterieträgers, in einer perspektivischen Ansicht. Der Batterieträger 2 weist in diesem Beispiel ein Bauteilelement 4 in Form einer Wanne auf. Es ist aber auch denkbar, dass das Bauteilelement 4 die Form lediglich einer der Seiten einer Wanne oder eine gänzlich andere Form aufweist (nicht dargestellt). Das Bauteilelement 4 weist hier weiter einen Aufnahmebereich 6 auf, der durch die Oberseite des Bodens 8 der Wanne und die Innenseiten der Wände 10a-d der Wanne begrenzt wird. In dem Aufnahmebereich 6, vorliegend im Inneren der Wanne, ist eine Schaumstoffstruktur 12 angeordnet und im Wesentlichen unlösbar mit dem Bauteilelement 4 verbunden. Die Schaumstoffstruktur 12 umgibt mehrere Batteriemodule 14, die innerhalb der Wanne von dem Aufnahmebereich 6 aufgenommen werden. Anstelle der Batteriemodule 14 können auch eine oder mehrere einzelne Batterien, auch genannt Batteriezellen, von dem Aufnahmebereich 6 aufgenommen werden. Die Schaumstoffstruktur 12 ist zwischen den Batteriemodulen 14 und dem Bauteilelement 4, hier in Form der Wanne, angeordnet und dient als Energieabsorber zwischen diesen Elementen. Die Form der in dieser und in den anderen Figuren der Zeichnung dargestellten Batteriemodule bzw. Batterien ist dabei als lediglich exemplarisch anzusehen.

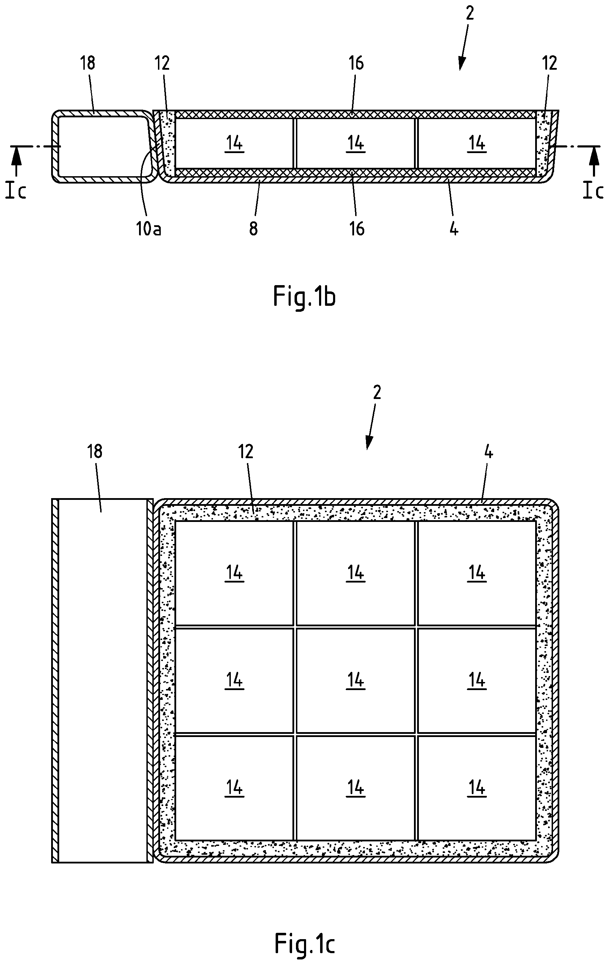

Neben den dargestellten Elementen des Batterieträgers können weitere Elemente vorhanden sein, beispielsweise ein Deckel zur Abdeckung der Batteriemodule 14 von oben sowie eine unterhalb der Wanne angeordnete Bodenplatte. Außerdem können die Batteriemodule mit einer Vergussmasse 16 vergossen sein, beispielsweise so, dass sie von ihrer Ober- und Unterseite von der Vergussmasse 16 bedeckt sind. Der Verguss der Batteriemodule ist in Fig. 1b dargestellt, die schematisch eine seitliche Schnittansicht entlang der Achse Ib in Fig. 1a zeigt. In Fig. 1a und 1c ist die Vergussmasse 16 zwecks besserer Übersichtlichkeit nicht dargestellt.

In Fig. 1b ist zudem ersichtlich, dass der durch die nicht senkrechten Wände 10 des als Wanne ausgebildeten Bauteilelements 4 bedingte Randbereich vorteilhaft durch die Schaumstoffstruktur 12 ausgefüllt und genutzt wird. Darüber hinaus ist an einer Außenseite der Wand 10a des Bauteilelements 4 ein Kraftverteilerelement 18 angeordnet. Das Kraftverteilerelement 18 ist dazu eingerichtet, Kräfte, die auf die Seite der Wand 10a einwirken, über die Fläche dieser Seite zu verteilen, so dass es nicht zu punktuellen Krafteinwirkungen auf die Seite der Wanne und somit der Schaumstoffstruktur 12 kommt. Zu diesem Zweck ist das Kraftverteilerelement 18 vorliegend so geformt, dass es formschlüssig an der Seite der Wand 10a anliegt und die Steifigkeit der Struktur des Batterieträgerbauteils 4 erhöht. Vorliegend ist das Kraftverteilerelement 18 zwecks besserer Übersichtlichkeit lediglich an der Außenseite der Wand 10a angeordnet. Es ist allerdings bevorzugt, dass jeweils zumindest ein Kraftverteilerelement 18 an Außenseiten von gegenüberliegenden Wänden 10a-d, insbesondere an allen Außenseiten der Wände 10a-d angeordnet, ist.

Fig. 1c zeigt schließlich einen Schnitt entlang der Achse Ic in Fig. 1b des Batterieträgerbauteils 2, hier des Batterieträgers. Es ist ersichtlich, dass die Schaumstoffstruktur 12 als innerer Rahmen der Wanne und somit als Schutz der darin aufgenommenen Batteriemodule 14 fungiert.

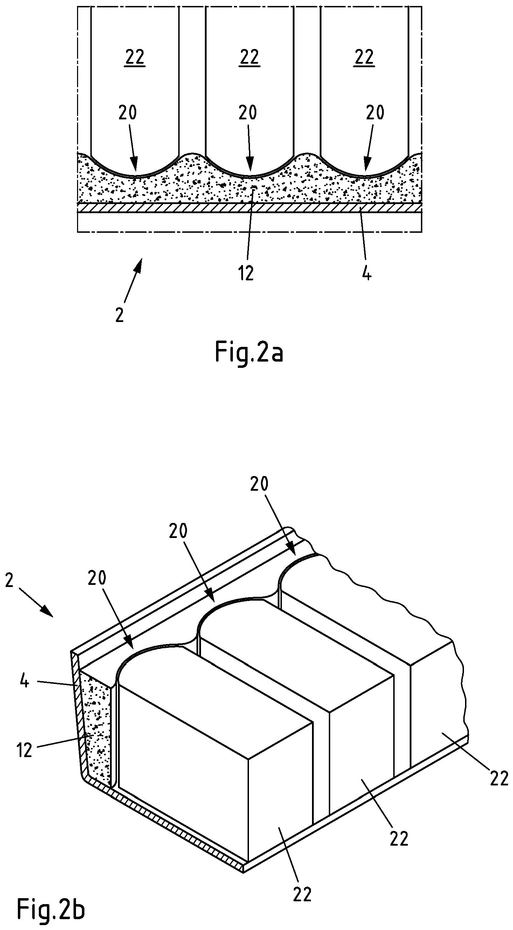

In Fig. 2a und 2b ist schematisch ein weiteres Ausführungsbeispiel eines Batterieträgerbauteils 2 dargestellt. In diesem Ausführungsbeispiel ist die Schaumstoffstruktur 12 derart angeordnet und eingerichtet, insbesondere geformt, dass sie mehrere Aufnahmen 20 für einzelne Batterien 22, auch Batteriezellen wie beispielsweise Pouch-Batteriezellen, bildet. In Fig. 2a ist das Bauteilelement 4 des Batterieträgerbauteils 2 in schematischer Draufsicht von oben dargestellt. Die dargestellten drei im Wesentlichen halbzylindrischen Aufnahmen 20 dienen der Aufnahme von drei einzelnen Batterien 22, wie in Fig. 2b in schematischer perspektivischer Ansicht dargestellt ist. Die dargestellte Anzahl von drei Batterien ist hier lediglich exemplarisch. Es kann vorgesehen sein, dass eine Vielzahl von einzelnen Batterien 22, von entsprechenden Aufnahmen 20 der Schaumstoffstruktur 12 oder auch ein oder mehrere Batteriemodule 14 von halbzylinderförmigen oder anders geformten Aufnahmen 20 aufgenommen und sicher fixiert werden.

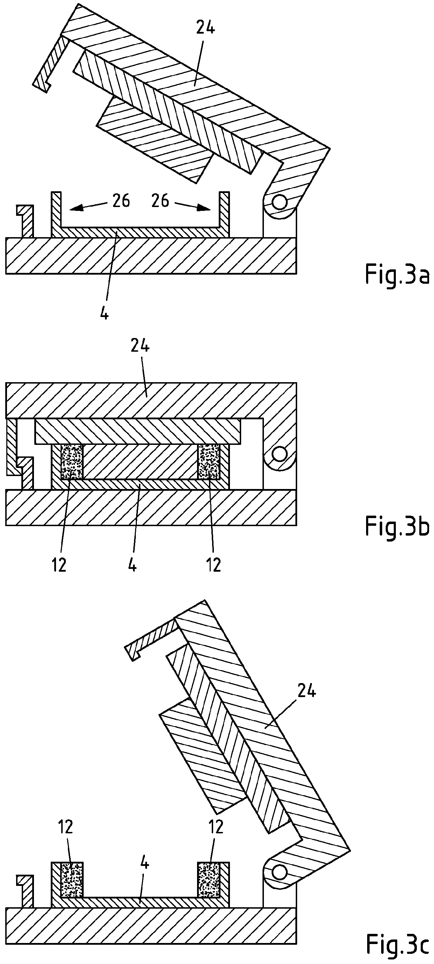

Fig. 3-5 zeigen schließlich Ausführungsbeispiele eines Verfahrens zur Herstellung eines Batterieträgerbauteils 2.

In dem gemäß Fig. 3a-c gezeigten ersten Ausführungsbeispiel des Verfahrens wird die Schaumstoffstruktur 12 in dem Aufnahmebereich 6 des in Forme einer Wanne vorliegenden Bauteilelements 4 angebracht, indem zunächst ein Formwerkzeug 24 derart in dem Aufnahmebereich 6 des Batterieträgerbauteils 2 lösbar angeordnet wird, dass Zwischenräume 26 zwischen der Innenseite der Wände 10a-d und dem Formwerkzeug 24 gebildet werden (Fig. 3a und 3b). In diese Zwischenräume 26 wird bei geschlossenem Formwerkzeug 24 dann der Schaumstoff eingespritzt (Fig. 3b) und zu der Schaumstoffstruktur 12 ausgehärtet. Sodann wird das Formwerkzeug 24 wieder geöffnet und das Bauteilelement 4 mit Schaumstoffstruktur 12 kann entnommen und das Formwerkzeug 24 erneut verwendet werden (Fig. 3c).

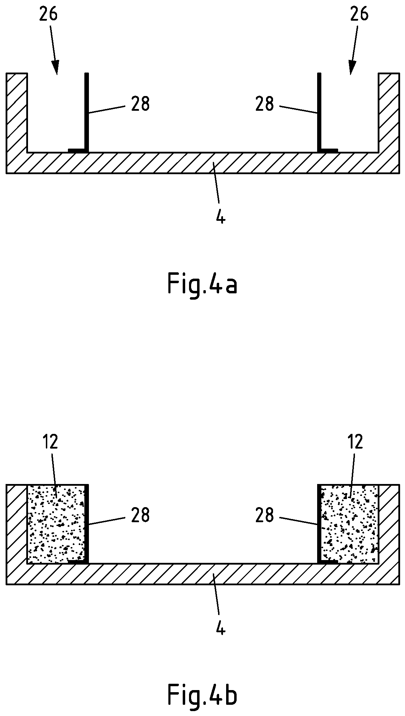

In dem gemäß Fig. 4a-b gezeigten zweitem Ausführungsbeispiel des Verfahrens wird die Schaumstoffstruktur 12 in dem Aufnahmebereich 6 angeordnet, indem zunächst Begrenzungselemente 28 derart in dem Aufnahmebereich 6 angeordnet, insbesondere an eine Innenseite des Bauteilelements 4 geklebt, werden, dass Zwischenräume 26, die hier nach oben hin offen sind, zwischen eine Innenseite der Außenwände 10a-d und den Begrenzungselementen 28 gebildet werden (Fig. 4a). In die Zwischenräume 26 wird dann der Schaumstoff eingespritzt und zu der Schaumstoffstruktur 12 ausgehärtet (Fig. 4b). Die Begrenzungselemente 28 verbleiben nach dem Aushärten des Schaumstoffs beispielsweise in dem Aufnahmebereich 6.

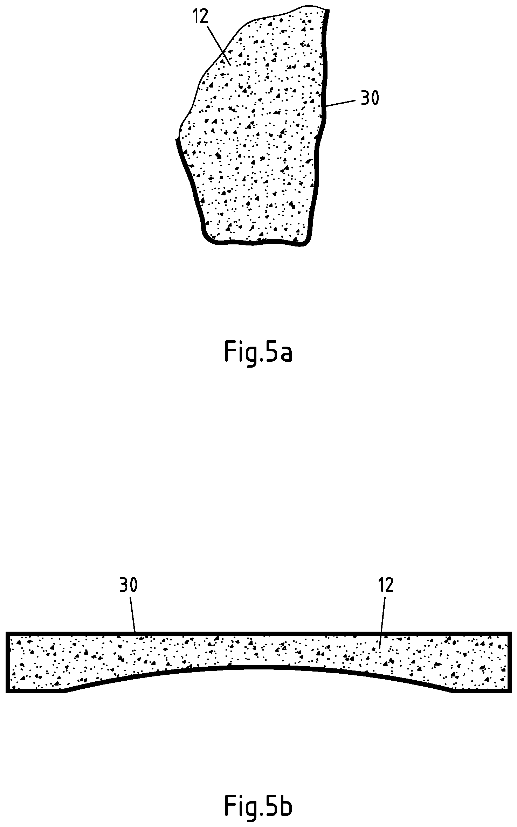

In dem gemäß Fig. 5a-b gezeigten dritten Ausführungsbeispiel des Verfahrens wird die Schaumstoffstruktur 12 in dem Aufnahmebereich 6 angebracht, indem der Schaumstoff in ein Formelement 30 eingebracht und anschließend verschäumt wird. Während des Verschäumens expandiert der Schaumstoff vorzugsweise. Beispielsweise wird der Schaumstoff in kleinen Kügelchen vorexpandiert und anschließend in Form der kleinen Kügelchen in das mindestens eine Formelement 30 eingebracht. Nachfolgend wird der eingebrachte Schaumstoff beispielsweise mittels Wasserdampfs oder Radiowellenstrahlung verschäumt, insbesondere indem der Schaumstoff zumindest teilweise expandiert und/oder verschweißt. Vorzugsweise wird das Expandieren des Schaumstoffs mittels der Innenkontur des zumindest einen Formelements begrenzt, so dass eine vorbestimmte Schaumstoffstruktur entstehen kann.

Bei dem in Fig. 5b dargestellten Verfahren wird eine andere Form der Schaumstoffstruktur 12 aufgrund der anders geformten Innenkontur des Formelements 30 zur Verfügung gestellt.

Die in dieser Spezifikation beschriebenen beispielhaften Ausführungsformen/Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Batterieträgerbauteil (2), insbesondere Batterieträger, zur Aufnahme zumindest einer als Antriebsenergiespeicher für ein elektrisches Fahrzeug dienenden Batterie,
- mit zumindest einem Bauteilelement (4) mit mindestens einem Aufnahmebereich (6) zur Anlage an und/oder Aufnahme der zumindest einen Batterie (14, 22), und
- mit zumindest einer Schaumstoffstruktur (12), wobei die Schaumstoffstruktur (12) zumindest teilweise in dem Aufnahmebereich (6) angeordnet ist.

2. Batterieträgerbauteil (2) nach Anspruch 1,
**dadurch gekennzeichnet,**
- **dass** das zumindest eine Bauteilelement (4) als Wanne mit einem Boden (8) und mit in einem Winkel dazu angeordneten Wänden (10a-d) ausgebildet ist, wobei die Oberseite des Bodens (8) und die Innenseiten der Wände (10a-d) den Aufnahmebereich (6) zumindest teilweise begrenzen.

3. Batterieträgerbauteil (2) nach Anspruch 2,
**dadurch gekennzeichnet,**
- **dass** die Schaumstoffstruktur (12) zumindest teilweise an den Innenseiten der Wände (10a-d) der Wanne angeordnet ist.

4. Batterieträgerbauteil (2) nach Anspruch 2 oder 3,
**dadurch gekennzeichnet,**
- **dass** an zumindest einer Außenseite der Wände (10a-d) zumindest ein Kraftverteilerelement (18) angeordnet ist, wobei das Kraftverteilerelement (18) dazu eingerichtet ist, auf die zumindest eine Außenseite der Wände (10a-d) einwirkenden Kräfte auf die jeweilige Wand (10a-d) zu verteilen.

5. Batterieträgerbauteil (2) nach Anspruch 4,
**dadurch gekennzeichnet,**
- **dass** das zumindest eine Kraftverteilerelement (18) als im Wesentlichen längliches Profil, insbesondere als extrudiertes Profil, ausgebildet ist.

6. Batterieträgerbauteil (2) nach einem der Ansprüche 1 bis 5,
**dadurch gekennzeichnet,**
- **dass** das Bauteilelement (4) als ein durch Umformen, insbesondere durch Tiefziehen hergestelltes, insbesondere dünnwandiges, Blechbauteil ausgebildet ist, wobei das Bauteilelement (4) vorzugsweise einstückig oder zweistückig ist.

7. Batterieträgerbauteil (2) nach einem der Ansprüche 1 bis 5,
**dadurch gekennzeichnet,**
- **dass** die Schaumstoffstruktur (12) derart angeordnet und eingerichtet ist, dass sie zumindest eine Aufnahme (20) für zumindest eine Batterie (14, 22), insbesondere für zumindest eine eine Batteriezelle (22), bildet und
- **dass** sich die Schaumstoffstruktur (12), insbesondere dass sich mehrere Aufnahmen (20) der Schaumstoffstruktur, vorzugsweise im Wesentlichen entlang der gesamten Innenseite der Wände (10a-d) erstrecken.

8. Batterieträgerbauteil (2) nach Anspruch 7,
**dadurch gekennzeichnet,**
- **dass** die zumindest eine Aufnahme (20) zu der Außenkontur der zumindest einen Batterie (14, 22) korrespondiert, insbesondere im Wesentlichen kurvenförmig, besonders bevorzugt halbzylindrisch, ausgebildet ist.

9. Verfahren zur Herstellung eines Batterieträgerbauteils (2), insbesondere eines Batterieträgers, vorzugsweise nach einem der Ansprüche 1 bis 8,
- bei dem ein Bauteilelement (4) mit einem Aufnahmebereich (6) zur Aufnahme von und/oder Anlage an zumindest einer Batterie (14, 22) bereitgestellt wird,
- bei dem das Bauteilelement (6) optional einer Oberflächenbehandlung unterzogen wird, und
- bei dem eine Schaumstoffstruktur (12) zumindest in dem Aufnahmebereich (6) angeordnet wird.

10. Verfahren nach Anspruch 9,
**dadurch gekennzeichnet,**
- **dass** die Schaumstoffstruktur (12) in dem Aufnahmebereich (6) angeordnet wird, indem ein Schaumstoff in das Bauteilelement (4) eingebracht, insbesondere eingespritzt, und zu der Schaumstoffstruktur (12) verschäumt, insbesondere ausgehärtet, wird.

11. Verfahren nach Anspruch 9 oder 10,
**dadurch gekennzeichnet,**
- **dass** die Schaumstoffstruktur (12) in dem Aufnahmebereich (6) angeordnet wird, indem ein Formwerkzeug (24) derart in dem Aufnahmebereich (6) lösbar angeordnet wird, dass zumindest ein Zwischenraum (26) zwischen einer Innenseite des Bauteilelements (4) und dem Formwerkzeug (24) gebildet wird, in den der Schaumstoff eingebracht, insbesondere eingespritzt, und zu der Schaumstoffstruktur (12) verschäumt, insbesondere ausgehärtet, wird.

12. Verfahren nach Anspruch 9 oder 10,
**dadurch gekennzeichnet,**
- **dass** die Schaumstoffstruktur (12) in dem Aufnahmebereich (6) angeordnet wird, indem zumindest ein Begrenzungselement (28) derart in dem Aufnahmebereich (6) angeordnet, insbesondere an eine Innenseite des Bauteilelements (4) geklebt, wird, dass zumindest ein Zwischenraum (26) zwischen einer Innenseite des Bauteilelements (4) und dem Begrenzungselement (28) gebildet wird, in den der Schaumstoff eingebracht, insbesondere eingespritzt, und zu der Schaumstoffstruktur (12) verschäumt, insbesondere ausgehärtet, wird.

13. Verfahren nach Anspruch 9,
**dadurch gekennzeichnet,**
- **dass** die Schaumstoffstruktur (12) in dem Aufnahmebereich (6) angeordnet wird, indem der Schaumstoff in ein Formelement (30) eingebracht, insbesondere eingespritzt, und zu der Schaumstoffstruktur verschäumt, insbesondere ausgehärtet wird, wobei das Formelement (30) das Verschäumen des Schaumstoffs zumindest teilweise begrenzt, und
- **dass** die Schaumstoffstruktur (12), insbesondere zusammen mit dem Formelement (30), in dem Aufnahmebereich (6) angeordnet wird.
